# EUROPEAN PATENT SPECIFICATION

(11) **EP 2 017 968 B1**
(45) Date of publication and mention of the grant of the patent: **16.05.2012**
(21) Application number: 06817887.0
(22) Date of filing: 24.11.2006
(51) Int. Cl.: H04B 1/74, H04J 3/16, H04J 3/14

(54) **A METHOD AND DEVICE FOR REALIZING PRIMARY-BACKUP PROTECTIVE OF LOW ORDER CROSS APPARATUS**
VERFAHREN UND EINRICHTUNG ZUR REALISIERUNG VON PRIMÄR-BACKUP-SCHUTZ FÜR EINE CROSS-VORRICHTUNG NIEDRIGER ORDNUNG
PROCÉDÉ ET DISPOSITIF POUR EFFECTUER UNE SAUVERGARDE PRIMAIRE PROTÉGEANT UN RÉPARTITEUR D'ORDRE FAIBLE

(30) Priority: 11.05.2006 CN 200610060645
(43) Date of publication of application: 21.01.2009
(73) Proprietor: Huawei Technologies Co., Ltd., Longgang District, Shenzhen Guangdong 518129 (CN)
(72) Inventor: RAN, Longbing, Guangdong 518129 (CN)
(74) Representative: Hengelhaupt, Jürgen
(86) International application number: PCT/CN2006/003160
(87) International publication number: WO 2007/131396

(56) References cited:
- EP-A2- 1 599 055
- CN-A- 1 510 845
- US-A- 5 799 001
- US-A1- 2003 002 505
- US-B1- 6 487 223
- CHEN Y.: 'Synchronous Digital Cross Connect Equipment (SDXC) and Its Application' DESIGNING TECHNIQUES OF POSTS July 2000,

## Description

This application claims the benefit of Chinese patent application number 200610060645.x, entitled "Method for primary-secondary protection of low-order cross device for implementing SDH low-order virtual container scheduling" and filed with the Chinese Patent Office on May 11, 2006.

### Field of the Invention

The invention relates to the field of Synchronous Digital Hierarchy (SDH) transport and in particular to a method and device for implementing primary-secondary protection of a low-order cross device.

### Background of the Invention

Scheduling of an SDH virtual container refers to that a high-order or low-order virtual container via an SDH port of an SDH transport device passes as a whole through the device and then is transported from a high- or low-order virtual container via an SDH port of the device. The device may modify an overhead in the virtual container during this procedure.

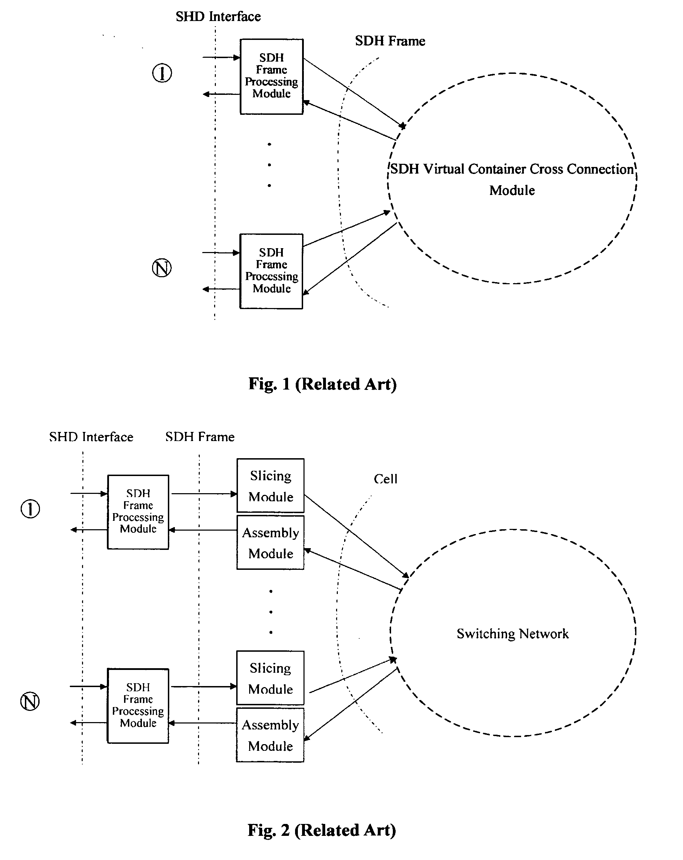

Currently, technologies for scheduling an SDH virtual container in Multi-Service Provisioning Platform (MSPP)/Multi-Service Transporting Platforms (MSTP) have been mature, and technologies based upon space division and time division crossing are mature technologies used in MSTP products. Figure 1 illustrates a commonly used method for scheduling an SDH virtual container in the MSPP/MSTP, where circled reference numbers 1 to N denote SDH interfaces.

A procedure for implementing SDH virtual container scheduling is described briefly as follows.

1. An SDH frame processing module performs operations of framing, pointer processing, overhead processing, etc., on an SDH frame via an SDH interface, and transports the processed SDH frame to an SDH virtual container cross connection module.

2. The SDH virtual container cross connection module schedules an SDH virtual container, which is to be scheduled, in the received SDH frame. This can be implemented by means well known to those skilled in the art, such as with the use of space division and time division crossing technologies. After accomplishing the virtual container scheduling, the SDH virtual container is transported to an SDH frame processing module at an exit.

3. The SDH frame processing module at the exit processes the received SDH virtual container and then transports the processed virtual container via an SDH interface.

Although the technologies for scheduling and transporting an SDH virtual container in the MSPP/MSTP have been mature, the MSPP/MSTP architecture may be limited in terms of transporting a data service.

General Multi-service Packet Switching (GMPS) is new technology for switching between respective modules of a device, which emerges as networks evolve. GMPS uses a uniform switching plane to accomplish switching of an SDH virtual container and multiple services such as data service. A method for implementing GMPS at present includes using a Fabric Switch to accomplish switching of an SDH virtual container and data. An external interface used when GMPS is used to implement SDH virtual container scheduling is the same as a traditional SDH interface. Figure 2 is a schematic diagram illustrating a method for implementing SDH virtual container scheduling by the use of GMPS in the prior art, where circled reference numbers 1 to N denote SDH interfaces.

A procedure for implementing SDH virtual container scheduling is as follows.

1. An SDH frame processing module performs operations of framing, pointer processing, overhead processing, etc., on an SDH frame via an SDH interface, and transports the processed SDH frame to a subsequent slicing module.

2. Dependent upon a high-order virtual container to be scheduled or a low-order virtual container to be scheduled, the slicing module slices a bit stream including the virtual container, encapsulates the sliced bit stream into the payload of a cell, fills in the cell head of the cell a switching network address corresponding to a destination assembly module as the destination address of the cell, and then transports the cell to the switching network.

3. The switching network transports the cell to the destination assembly module dependent upon the destination address in the cell head upon reception of the cell.

4. The destination assembly module assembles the cell into an SDH frame, and then transports the SDH frame to an SDH frame processing module at an exit.

5. The SDH frame processing module at the exit processes the received SDH frame, and transport the processed SDH frame via an SDH interface, thereby implementing the SDH virtual container scheduling.

This solution in the prior art is applicable to implementing SDH high-order virtual container scheduling, but not to implementing SDH low-order virtual container scheduling. The reasons are as follows.

Firstly, when a bit stream including an SDH virtual container to be scheduled is sliced, the sliced bit stream typically has to be collected into the payload of a cell. Therefore, in the above solution, slicing of a bit stream including an SDH high-order virtual container results in a relatively short waiting time due to a relatively high rate of the bit stream, while slicing of a bit stream including an SDH low-order virtual container results in a relatively long waiting time due to a relatively low rate of the bit stream. Consequently, a large delay occurs when the above solution is used to implement SDH low-order virtual container scheduling, while there may be a strict requirement on the delay for transport of an SDH virtual container.

Secondly, since slicing of a bit stream including a low-order virtual container shall be taken into account for each line card, costs of the slicing and assembly modules may be much higher compared to those of MSPP/MSTP products.

In order to solve the above problem of the large delay and the high cost when GMPS is used to implement the SDH low-order virtual container scheduling, there has been proposed a method for implementing SDH virtual container scheduling based upon a switching network in which a switching network is used to implement SDH high-order virtual container scheduling, and the switching network and a low-order cross device connected to the switching network are used to implement SDH low-order virtual container scheduling.

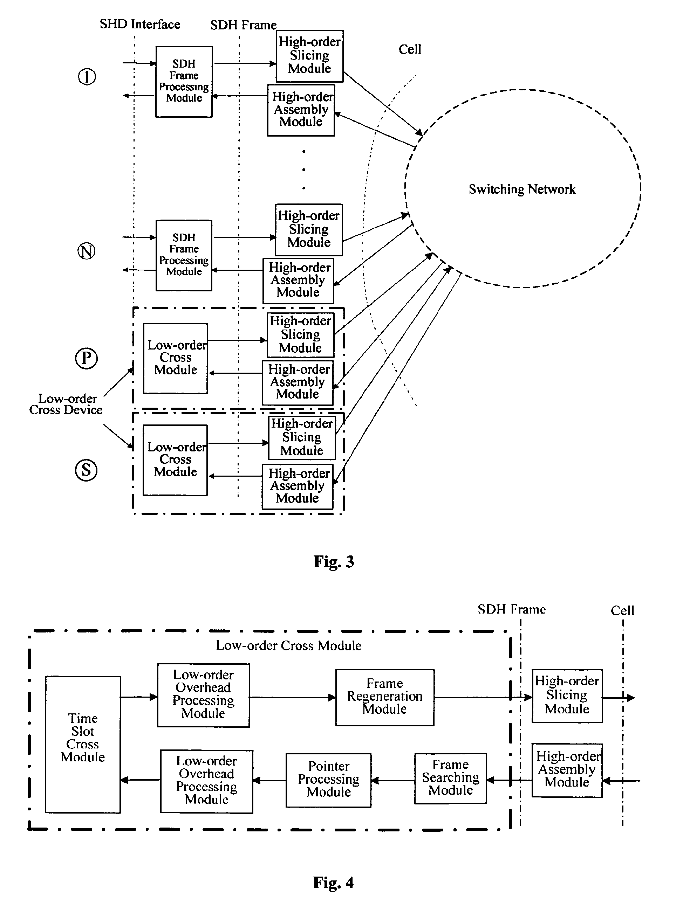

Figure 3 is a schematic diagram illustrating an embodiment for implementing this method, where circled reference numbers 1 to N denote SDH interfaces, and circled denotations P and S denote respectively a primary low-order cross device and a secondary low-order cross device each including a low-order cross module, a high-order assembly module connected to the low-order cross module, and a high-order slicing module connected to the low-order cross module. In this embodiment, the SDH frame processing module performs operations of framing, pointer processing, overhead processing, etc. on an SDH frame received via an SDH interface, the function of which can be implemented by use of a chip called Framer. The high-order slicing module receives the SDH frame from the SDH frame processing module, slices a bit stream including a high-order virtual container dependent upon an SDH high-order virtual container to be scheduled or a high-order virtual container in which an SDH low-order virtual container to be scheduled lies, and converts the sliced bit stream into a cell identifiable by a switching network. The high-order assembly module implements a reverse procedure relative to that of the high-order slicing module by assembling the cell from the switching network into an SDH frame. The primary low-order cross device and the secondary low-order cross device are used for performing cross connection of a low-order virtual container in a way that the former acts as a low-order cross device for currently performing cross connection of the low-order virtual container, and the latter is used for performing cross connection of the low-order virtual container when the primary low-order cross device fails.

In Figure 3, the low-order cross modules in the primary low-order cross device and the secondary low-order cross device are core modules for implementing cross connection of an SDH low-order virtual container, the implementing procedure of which is the same as that in Figure 1 in which the SDH virtual container cross connection module performs cross connection of a low-order virtual container. This procedure will be described briefly with reference to Figure 4. The high-order assembly module receives a cell from the switching network, assembles the received cells into an SDH frame, and then transports the SDH frame to the low-order cross module, where the cell is obtained through slicing a bit stream including a high-order virtual container dependent upon the high-order virtual container in which a low-order virtual container to be scheduled lies. The processing procedure in the low-order cross module is as follows: a frame searching module searches the received SDH frame for A1 and A2, and performs pointer processing on the received SDH frame; a low-order overhead processing module performs overhead processing on the pointer processed SDH frame; subsequently a time slot cross module performs time slot crossing on the overhead processed SDH frame; and then optionally a subsequent low-order overhead processing module performs overhead modification, and finally a frame regeneration module regenerates and supplies a complete SDH frame to the high-order slicing module. A cross connection of the low-order virtual container can thus be accomplished in such a procedure. A low-order virtual container, the exit of which is only the same destination service port, is mapped into one or more high-order virtual containers. Thereafter, dependent upon a high-order virtual container in which the cross-connected low-order virtual container lies, the high-order slicing module slices a bit stream including the high-order virtual container, converts the sliced bit stream into a cell, and transports the cell to the switching network.

The above SDH frame processing module, high-order slicing module, high-order assembly module and low-order cross module can all be implemented by means well known to those skilled in the art. It can be readily appreciated that scheduling of an SDH virtual container is configured in advance and the above operations are performed according to the configuration.

A procedure for performing SDH high-order virtual container scheduling by a method for implementing SDH virtual container scheduling on the basis of a switching network is described below with reference to Figure 3.

1. An SDH frame processing module receives an SDH frame via an SDH interface, processes the SDH frame, and transports the processed SDH frame to a subsequent slicing module.

2. On the basis of an SDH high-order virtual container to be scheduled, the slicing module slices a bit stream including the high-order virtual container, fills the sliced bit stream into the payload of a cell, fills in the cell head of the cell an address of a switching network corresponding to a destination assembly module as a destination address of the cell, and transports the cell to the switching network.

3. The switching network transports the cell to the destination assembly module dependent upon the destination address in the cell head upon reception of the cell.

4. The destination assembly module collects the cell, recovers the collected cells into an SDH frame, and then transports the SDH frame to an SDH frame processing module at an exit.

5. The SDH frame processing module at the exit processes the received SDH frame, and transports the processed SDH frame via an SDH interface, thereby implementing the high-order virtual container scheduling.

A procedure for performing SDH low-order virtual container scheduling by a method for implementing SDH virtual container scheduling based upon a switching network will be described below with reference to Figure 3.

1. An SDH frame processing module receives an SDH frame via an SDH interface, processes the SDH frame, and transports the processed SDH frame to a subsequent high-order slicing module.

2. On the basis of a high-order virtual container in which an SDH low-order virtual container to be scheduled lies, the high-order slicing module slices a bit stream including the high-order virtual container, fills the sliced bit stream into the payload of a cell, fills in the cell head of the cell an address of a switching network corresponding to a primary low-order cross module (a low-order cross module in a primary low-order cross device) as a destination address of the cell, and transports the cell to the switching network.

3. The switching network transports the cell to a high-order assembly module to which the primary low-order cross module is connected according to the destination address in the cell head upon reception of the cell, and the high-order assembly module collects the cell, recovers the collected cells into an SDH frame, and then transports the SDH frame to the primary low-order cross module.

4. The primary low-order cross module cross-connects the low-order virtual container, maps the cross-connected low-order virtual container into an SDH frame, and supplies the SDH frame to a high-order slicing module connected to the primary low-order cross module.

5. The high-order slicing module receives the SDH frame from the primary low-order cross module, and dependent upon a high-order virtual container in which the cross-connected SDH low-order virtual container lies, slices a bit stream including the high-order virtual container, converts the sliced bit stream into a cell, fills in the cell head of the cell an address of a switching network corresponding to a destination high-order assembly module as a destination address of the cell, and transports the cell to the switching network.

6. The switching network transports the cell to the destination high-order assembly module dependent upon the destination address in the cell head upon reception of the cell.

7. The destination high-order assembly module recovers the cell into an SDH frame, and then transports the SDH frame to an SDH frame processing module at an exit.

8. The SDH frame processing module at the exit processes the received SDH frame, transports the processed SDH frame via an SDH interface, thereby implementing the low-order virtual container scheduling.

It shall be noted that with respect to the step 2, the high-order slicing module can slice the bit stream including only the high-order virtual container in which the SDH low-order virtual container to be scheduled lies; or alternatively can slice a bit stream including the high-order virtual container in which the SDH low-order virtual container to be scheduled lies and relevant overheads, pointers, etc. Further with respect to the step 4, the primary low-order cross module can encapsulate the cross-connected SDH virtual container into an SDH frame, and then supply the SDH frame to a high-order slicing module connected to the primary low-order cross module; or alternatively can supply the cross-connected SDH virtual container directly to the high-order slicing module in the structural form of a Virtual Container (VC), a Tributary Unit (TU), an Administrative Unit (AU), etc.

The above procedure for implementing the SDH low-order virtual container scheduling is analyzed as follows. The high-order slicing module performs slicing dependent upon an SDH high-order virtual container, i.e. performs slicing regarding the high-order virtual container as a whole. With respect to a cell obtained from such slicing, a switching network may only perform scheduling on a whole of the SDH high-order virtual container, and may not perform scheduling individually on a low-order virtual container in the high-order virtual container. The low-order virtual container scheduling is accomplished by use of a low-order cross device. In other words, the low-order cross device schedules the SDH low-order virtual container, which is to be scheduled, onto a corresponding low-order virtual container of the corresponding SDH high-order virtual container.

As mentioned above, a secondary low-order cross device is used to participate in scheduling of a low-order virtual container for protection upon failure of a primary low-order cross device. When performing SDH low-order virtual container scheduling according to the above procedure, if the primary low-order cross device is found failure, then primary-secondary switching is performed as follows.

1. It is determined that the primary low-order cross device fails.

2. In a high-order slicing module connected to an SDH frame processing module, a destination address of a cell obtained from conversion of a bit stream including a high-order virtual container in which an SDH low-order virtual container to be scheduled lies is modified to be a switching network address corresponding to a secondary low-order cross module (a low-order cross module in the secondary low-order cross device).

As can be seen, in order to accomplish switching from the primary low-order cross device to the secondary low-order cross device, it is necessary to modify the destination address of each cell obtained from conversion of a bit stream including a high-order virtual container in which an SDH low-order virtual container to be scheduled lies. If this procedure is implemented with hardware, then because the switching network address corresponding to a low-order cross module is fixed, i.e. corresponds to a fixed slot on a single board in which a lower-order cross device lies, thus it is necessary for the slot on the single board to be reserved specially for installation of the lower-order cross device to reduce the flexibility of the use of the single board. A status line needs to be additionally connected to notify all other single boards about switching of status of the primary and secondary low-order cross devices, thereby increasing the cost of the switching. The time for the switching may be prolonged if the procedure is implemented with software.

Related art is described in US 6 487 223 B1 which discloses an SDH transmission apparatus comprising a cross-connect unit with high-order group ports and low-order group ports to interface with transmission units.

### Summary of the Invention

An object of the present invention is to provide a method and device for primary-secondary protection of a low-order cross device for implementing SDH low-order virtual container scheduling on the basis of a switching network, which can implement rapidly primary-secondary switching of the low-order cross device.

To achieve the above object, an embodiment of the invention provides a method for primary-secondary protection of a low-order cross device for implementing SDH low-order virtual container scheduling on the basis of a switching network, where the SDH low-order virtual container scheduling is implemented through the switching network and two or more low-order cross devices connected to the switching network, one of the two or more low-order cross devices which is in a working status is a primary low-order cross device, and the others in a backup status each are a secondary low-order cross device.

The method includes:

allocating a multicast ID as a destination address of a bit stream including a high-order virtual container, the high-order virtual container including the SDH low-order virtual container to be scheduled, and the multicast ID pointing respectively to ports in the switching network which are connected to the two or more low-order cross devices;

when the primary low-order cross device works properly, closing connecting channels between the switching network and the secondary low-order cross devices, the ports in the switching network which are connected to the primary low-order cross device and the secondary low-order cross devices are pointed by the multicast ID; and

opening a connecting channel between the switching network and one of the secondary low-order cross devices upon failure of the primary low-order cross device, the ports in the switching network which are connected to the primary low-order cross device and the secondary low-order cross devices are pointed by the multicast ID.

There is also provided a device for implementing primary-secondary protection of a low-order cross device, comprising two or more low-order cross devices connected to a switching network, wherein the device further comprises a controller which controls respectively opening and closing of connecting channels between the low-order cross devices and the switching network, and the controller allocates a multicast ID as a destination address of a bit stream including a high-order virtual container, the high-order virtual container including an SDH low-order virtual container to be scheduled, the multicast ID pointing respectively to ports, which are connected to the low-order cross devices, in the switching network, when the primary low-order cross device works properly, the controller is configured to close connecting channels between the switching network and the secondary low-order cross devices, the ports in the switching network which are connected to the primary low-order cross device and the secondary low-order cross devices are pointed by the multicast ID; and the controller is configured to open a connecting channel between the switching network and one of the secondary low-order cross devices upon failure of the primary low-order cross device, the ports in the switching network which are connected to the primary low-order cross device and the secondary low-order cross devices are pointed by the multicast ID.

By allocating a multicast ID and controlling opening and closing of connecting channels between the switching network and the primary and secondary low-order cross devices, the present invention achieves the purpose of disabling or enabling the low-order cross device, thereby accomplishing primary-secondary switching of the low-order cross device by the use of the multicast technology for the switching network, so as to rapidly implement protection.

### Brief Description of the Drawings

Figure 1 is a schematic diagram illustrating a method for implementing SDH virtual container scheduling by the use of space division and time division cross technologies in the prior art;

Figure 2 is a schematic diagram illustrating a method for implementing SDH virtual container scheduling by the use of GMPS in the prior art;

Figure 3 is a schematic diagram illustrating a method for implementing SDH virtual container scheduling based upon a switching network;

Figure 4 is a schematic diagram illustrating the internal structure of a low-order cross module illustrated in Figure 3 and a high-order slicing module and a high-order assembly module connected to the low-order cross module;

Figure 5 is a flow chart illustrating a method for primary-secondary protection of a low-order cross device for implementing SDH low-order virtual container scheduling based upon a switching network according to an embodiment of the invention; and

Figure 6 is a structural diagram illustrating a device for primary-secondary protection of a low-order cross device for implementing SDH low-order virtual container scheduling based upon a switching network according to an embodiment of the invention.

### Detailed Description of the Invention

Embodiments of the invention are described further in detail as follows in conjunction with the drawings to make the above object, features and advantages thereof more apparent and readily understood.

Embodiments of the present invention provide a method for primary-secondary protection of a low-order cross device for implementing SDH low-order virtual container scheduling on the basis of a switching network, which accomplishes switching of primary and secondary low-order cross devices by the use of multicast technology. According to an embodiment of the present invention, the method is implemented as follows.

The SDH low-order virtual container scheduling is implemented through a switching network and two or more low-order cross devices connected to the switching network. One of the two or more low-order cross devices which is in a working status is a primary low-order cross device, and the others in a backup status each is a secondary low-order cross device.

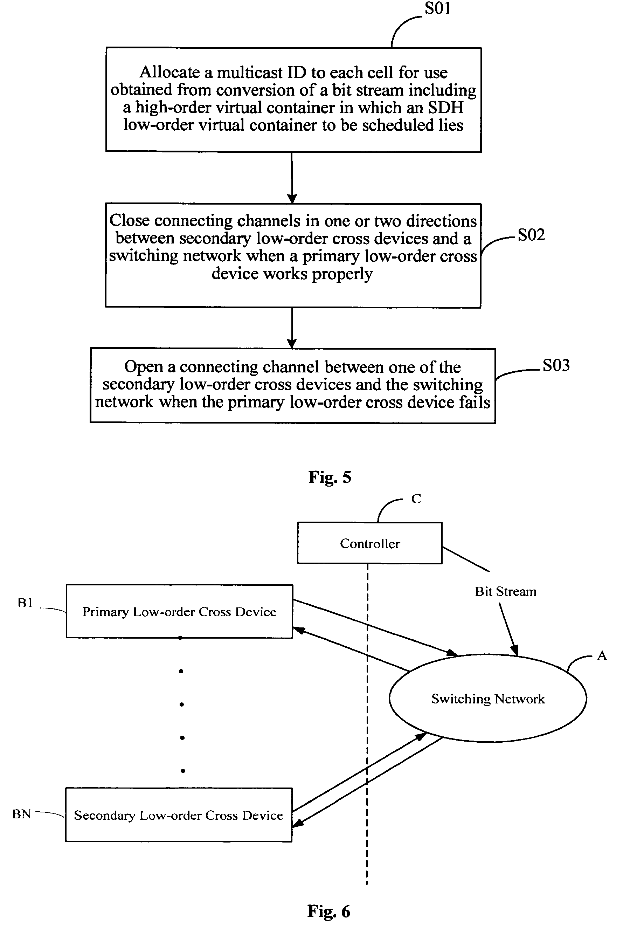

As illustrated in Figure 5, the method includes:

S01. allocating a multicast ID to each cell for use obtained from conversion of a bit stream including a high-order virtual container in which an SDH low-order virtual container to be scheduled lies, the multicast ID being corresponding to switching network ports in the switching network which are connected to the primary and secondary low-order cross devices;

S02. closing connecting channels in one or two directions between the secondary low-order cross devices and the switching network when the primary low-order cross device works properly; and

S03. opening a connecting channel between one of the secondary low-order cross devices and the switching network when the primary low-order cross device fails, thereby accomplishing primary-secondary switching of the low-order cross device.

Preferably, a connecting channel between the primary low-order cross device and the switching network is closed when the primary low-order cross device fails.

More preferably, firstly a connecting channel between the primary low-order cross device and the switching network is closed, and then a connecting channel between one of the secondary low-order cross devices and the switching network is opened when the primary low-order cross device fails.

Still referring to Figure 3, according to this embodiment, when the SDH low-order virtual container scheduling is performed under normal conditions, a bit stream including a high-order virtual container in which an SDH low-order virtual container to be scheduled lies is converted, by an SDH frame processing module and a high-order slicing module, into a cell, the allocated multicast ID is filled in the cell head of the cell, and then the cell is transported to the switching network. The switching network transports the cell to a high-order assembly module connected to a primary low-order cross module dependent upon a destination address in the cell head, i.e. the multicast ID, upon reception of the cell. The high-order assembly module reassembles the received cells into an SDH frame and transports the SDH frame to a primary low-order cross module. At this time, the connecting channels in one or two directions between the secondary low-order cross devices and the switching network are in a closed status, and therefore the cell can not be transported to any secondary low-order cross device and/or no secondary low-order cross device can transport any processed SDH virtual container to the switching network. As to the subsequent processes, the reference can be made of the relevant descriptions above, and these processes are omitted here.

In the above procedure, primary-secondary switching can be performed as follows upon detection of a failure of the primary low-order cross device:

1. determining that the primary low-order cross device fails; and

2. opening a connecting channel between one of the secondary low-order cross devices and the switching network, thereby accomplishing primary-secondary switching of the low-order cross device.

In another embodiment of the present invention, firstly a connecting channel between the primary low-order cross device and the switching network is closed, and then a connecting channel between one of the secondary low-order cross devices and the switching network is opened upon determination of a failure of the primary low-order cross device. In a further embodiment of the present invention, firstly a connecting channel between one of the secondary low-order cross devices and the switching network is opened, and then a connecting channel between the primary low-order cross device and the switching network is closed upon determination of a failure of the primary low-order cross device.

There may be one or more secondary low-order cross devices according to specific scenarios. It can be readily appreciated that in the case of only one secondary low-order cross device, the method according to the present invention can allocates a bi-cast ID to the cell for use obtained from conversion of a bit stream including a high-order virtual container in which an SDH low-order virtual container to be scheduled lies, the bi-cast ID being corresponding to two ports of the switching network. In other words, a bi-cast ID is a specific scenario of a multicast ID.

Correspondingly, a device for implementing primary- secondary protection of a low-order cross device is provided. As illustrated in Figure 6, the device includes two or more low-order cross devices B1-BN connected to a switching network A, and a controller C which controls respectively the opening and closing of connecting channels between the low-order cross devices B1-BN and the switching network, and which allocates a multicast ID as a destination address of a bit stream including a high-order virtual container, the multicast ID pointing respectively to ports, which are connected to the low-order cross devices B1-BN, in the switching network.

Although the exemplary embodiments of the present invention have been described, those skilled in the art can modify the embodiments as disclosed here when reading and grasping the principle and teaching of the present invention. For instance, the specification has presented descriptions of the exemplary embodiments of the present invention based upon conversion of a bit stream including an SDH virtual container to be scheduled into a cell, but the method according to the present invention can also be applied in conversion of an SDH virtual container to be scheduled into packets. Accordingly, it is intended that the scope of the present invention shall be defined by the appended claims.

## Claims

1. A method for primary-secondary protection of a low-order cross device for implementing SDH low-order virtual container scheduling on the basis of a switching network (A), wherein the SDH low-order virtual container scheduling is implemented through the switching network (A) and two or more low-order cross devices (B1-BN) connected to the switching network (A), one of the two or more low-order cross devices which is in a working status is a primary low-order cross device (B1), and the others in a backup status each is a secondary low-order cross device (BN),
wherein the method comprises:
allocating a multicast ID as a destination address of a bit stream including a high-order virtual container, the high-order virtual container including an SDH low-order virtual container to be scheduled (S01), and the multicast ID pointing respectively to ports in the switching network which are connected to the two or more low-order cross devices;
when the primary low-order cross device works properly, closing connecting channels between the switching network and the secondary low-order cross devices, the ports in the switching network which are connected to the primary low-order cross device and the secondary low-order cross devices are pointed by the multicast ID (S02); and
opening a connecting channel between the switching network and one of the secondary low-order cross devices upon failure of the primary low-order cross device, the ports in the switching network which are connected to the primary low-order cross device and the secondary low-order cross devices are pointed by the multicast ID (S03).

2. The method according to claim 1, wherein the bit stream has a form of cells.

3. The method according to claim 2, wherein the bit stream is converted into the form of cells through being sliced.

4. The method according to claim 1, wherein the bit stream has a form of packets.

5. The method according to claim 1, wherein closing connecting channels between the switching network and the secondary low-order cross devices comprises:
closing the connecting channels in one or more directions between the switching network and the secondary low-order cross devices.

6. The method according to claim 1, wherein opening a connecting channel between the switching network and one of the secondary low-order cross devices upon failure of the primary low-order cross device further comprises:
closing a connecting channel between the switching network and the primary low-order cross device.

7. The method according to claim 6, wherein closing a connecting channel between the switching network and the primary low-order cross device is followed by opening a connecting channel between the switching network and one of the secondary low-order cross devices.

8. The method according to claim1, wherein the SDH low-order virtual container scheduling is implemented in such a manner that two low-order cross devices are connected to the switching network.

9. The method according to claim 8, wherein the multicast ID is a bi-cast ID, the bi-cast ID pointing respectively to the ports in the switching network which are connected to the two low-order cross devices.

10. A device for implementing primary-secondary protection of a low-order cross device for implementing SDH low-order virtual container scheduling on the basis of a switching network (A), said device comprising two or more low-order cross devices (B1-BN) connected to a switching network (A), wherein one of the two or more low-order cross devices which is in a working status is a primary low-order cross device, and the other in a backup status each is a secondary low-order cross device, wherein said device further comprises a controller (C) which controls respectively opening and closing of connecting channels between the low-order cross devices (B1-BN) and the switching network (A), and the controller allocates a multicast ID as a destination address of a bit stream including a high-order virtual container, the high-order virtual container including an SDH low-order virtual container to be scheduled, the multicast ID pointing respectively to ports, which are connected to the low-order cross devices (B1-BN), in the switching network (A), when the primary low-order cross device works properly, the controller is configured to close connecting channels between the switching network and the secondary low-order cross devices, the ports in the switching network which are connected to the primary low-order cross device and the secondary low-order cross devices are pointed by the multicast ID; and the controller is configured to open a connecting channel between the switching network and one of the secondary low-order cross devices upon failure of the primary low-order cross device, the ports in the switching network which are connected to the primary low-order cross device and the secondary low-order cross devices are pointed by the multicast ID.

## Patentansprüche

1. Verfahren für einen primären/sekundären Schutz einer Cross-Vorrichtung niedriger Ordnung zum Realisieren einer Planung virtueller SDH-Container niedriger Ordnung auf der Grundlage eines Wählnetzes (A), wobei die Planung virtueller SDH-Container niedriger Ordnung durch das Wählnetz (A) und zwei oder mehrere Cross-Vorrichtungen (B1 bis BN) niedriger Ordnung, die mit dem Wählnetz (A) verbunden sind, realisiert wird, wobei eine der zwei oder mehreren Cross-Vorrichtungen niedriger Ordnung, die in einem Arbeitszustand ist, eine primäre Cross-Vorrichtung (B1) niedriger Ordnung ist und die anderen in einem Bereitschaftszustand sind, wovon jede eine sekundäre Cross-Vorrichtung (BN) niedriger Ordnung ist,
wobei das Verfahren Folgendes umfasst:
Zuweisen einer Multicast-Kennung als eine Zieladresse eines Bitstroms, der einen virtuellen Container hoher Ordnung enthält, wobei der virtuelle Container hoher Ordnung einen virtuellen SDH-Container niedriger Ordnung, der geplant werden soll (S01), enthält, und die Multicast-Kennung jeweils auf Anschlüsse in dem Wählnetz zeigt, die mit den zwei oder mehreren Cross-Vorrichtungen niedriger Ordnung verbunden sind;
dann, wenn die primäre Cross-Vorrichtung niedriger Ordnung korrekt arbeitet, Schließen von Verbindungskanälen zwischen dem Wählnetz und den sekundären Cross-Vorrichtungen niedriger Ordnung, wobei die Anschlüsse in dem Wählnetz, die mit der primären Cross-Vorrichtung niedriger Ordnung und den sekundären Cross-Vorrichtungen niedriger Ordnung verbunden sind, durch die Multicast-Kennung angezeigt werden (S02); und
Öffnen eines Verbindungskanals zwischen dem Wählnetz und einer der sekundären Cross-Vorrichtungen niedriger Ordnung beim Ausfall der primären Cross-Vorrichtung niedriger Ordnung, wobei die Anschlüsse in dem Wählnetz, die mit der primären Cross-Vorrichtung niedriger Ordnung und den sekundären Cross-Vorrichtungen niedriger Ordnung verbunden sind, durch die Multicast-Kennung angezeigt werden (S03).

2. Verfahren nach Anspruch 1, wobei der Bitstrom eine Form von Zellen aufweist.

3. Verfahren nach Anspruch 2, wobei der Bitstrom, indem er geteilt wird, in die Form von Zellen umgesetzt wird.

4. Verfahren nach Anspruch 1, wobei der Bitstrom eine Form von Paketen aufweist.

5. Verfahren nach Anspruch 1, wobei das Schließen von Verbindungskanälen zwischen dem Wählnetz und den sekundären Cross-Vorrichtungen niedriger Ordnung Folgendes umfasst:
Schließen der Verbindungskanäle in einer oder mehreren Richtungen zwischen dem Wählnetz und den sekundären Cross-Vorrichtungen niedriger Ordnung.

6. Verfahren nach Anspruch 1, wobei das Öffnen eines Verbindungskanals zwischen dem Wählnetz und einer der sekundären Cross-Vorrichtungen niedriger Ordnung beim Ausfall der primären Cross-Vorrichtung niedriger Ordnung ferner Folgendes umfasst:
Schließen eines Verbindungskanals zwischen dem Wählnetz und der primären Cross-Vorrichtung niedriger Ordnung.

7. Verfahren nach Anspruch 6, wobei dem Schließen eines Verbindungskanals zwischen dem Wählnetz und der primären Cross-Vorrichtung niedriger Ordnung ein Öffnen eines Verbindungskanals zwischen dem Wählnetz und einer der sekundären Cross-Vorrichtungen niedriger Ordnung folgt.

8. Verfahren nach Anspruch 1, wobei die Planung eines virtuellen SDH-Containers niedriger Ordnung in der Weise realisiert wird, dass zwei Cross-Vorrichtungen niedriger Ordnung mit dem Wählnetz verbunden sind.

9. Verfahren nach Anspruch 8, wobei die Multicast-Kennung eine Bicast-Kennung ist, wobei die Bicast-Kennung jeweils auf die Anschlüsse in dem Wählnetz zeigt, die mit den beiden Cross-Vorrichtungen niedriger Ordnung verbunden sind.

10. Vorrichtung zum Implementieren eines primären/sekundären Schutzes einer Cross-Vorrichtung niedriger Ordnung zum Realisieren einer Planung virtueller SDH-Container niedriger Ordnung auf der Grundlage eines Wählnetzes (A), wobei die Vorrichtung zwei oder mehrere Cross-Vorrichtungen (B1 bis BN) niedriger Ordnung umfasst, die mit einem Wählnetz (A) verbunden sind, wobei eine der zwei oder mehreren Cross-Vorrichtungen niedriger Ordnung, die in einem Arbeitszustand ist, eine primäre Cross-Vorrichtung niedriger Ordnung ist und die anderen in einem Bereitschaftszustand sind, wovon jede eine sekundäre Cross-Vorrichtung niedriger Ordnung ist, wobei die Vorrichtung ferner eine Steuereinheit (C) umfasst, die das Öffnen bzw. Schließen von Verbindungskanälen zwischen den Cross-Vorrichtungen (B1 bis BN) niedriger Ordnung und dem Wählnetz (A) steuert, und die Steuereinheit eine Multicast-Kennung als eine Zieladresse eines Bitstroms, der einen virtuellen Container hoher Ordnung enthält, zuweist, wobei der virtuelle Container hoher Ordnung einen virtuellen SDH-Container niedriger Ordnung, der geplant werden soll, enthält, wobei die Multicast-Kennung jeweils auf Anschlüsse zeigt, die mit den Cross-Vorrichtungen (B1 bis BN) niedriger Ordnung in dem Wählnetz (A) verbunden sind, wobei dann, wenn die primäre Cross-Vorrichtung niedriger Ordnung korrekt arbeitet, die Steuereinheit eingerichtet ist, Verbindungskanäle zwischen dem Wählnetz und den sekundären Cross-Vorrichtungen niedriger Ordnung zu schließen, wobei die Anschlüsse in dem Wählnetz, die mit der primären Cross-Vorrichtung niedriger Ordnung und den sekundären Cross-Vorrichtungen niedriger Ordnung verbunden sind, durch die Multicast-Kennung angezeigt werden; und die Steuereinheit eingerichtet ist, einen Verbindungskanal zwischen dem Wählnetz und einer der sekundären Cross-Vorrichtungen niedriger Ordnung zu öffnen beim Ausfall der primären Cross-Vorrichtung niedriger Ordnung, wobei die Anschlüsse in dem Wählnetz, die mit der primären Cross-Vorrichtung niedriger Ordnung und den sekundären Cross-Vorrichtungen niedriger Ordnung verbunden sind, durch die Multicast-Kennung angezeigt werden.

## Revendications

1. Procédé de protection primaire - secondaire d'un dispositif d'interconnexion d'ordre faible destiné à mettre en oeuvre une programmation de contenant virtuel d'ordre faible de hiérarchie SDH sur la base d'un réseau en commutation (A) dans lequel la programmation d'un contenant virtuel d'ordre faible de hiérarchie SDH est mise en oeuvre par le biais du réseau en commutation (A), et de deux dispositifs d'interconnexion d'ordre faible (B1 à BN) ou plus, reliés au réseau en commutation (A), l'un des deux dispositifs d'interconnexion d'ordre faible ou plus, qui se trouve à l'état actif, étant un dispositif principal d'interconnexion d'ordre faible (B1) et les autres, à l'état de sauvegarde, étant chacun un dispositif secondaire d'interconnexion d'ordre faible (BN),
dans lequel le procédé comprend :
l'allocation d'un identificateur ID multidestinataire comme adresse de destination d'un flux binaire incluant un contenant virtuel d'ordre élevé, le contenant virtuel d'ordre élevé incluant un contenant virtuel d'ordre faible de hiérarchie SDH devant être programmé (S01) et l'identificateur ID multidestinataire pointant respectivement vers des ports dans le réseau en commutation, lesquels sont reliés aux deux ou plusieurs dispositifs d'interconnexion d'ordre faible,
la fermeture, lorsque le dispositif principal d'interconnexion d'ordre faible fonctionne correctement, des canaux de connexion entre le réseau en commutation et des dispositifs secondaires d'interconnexion d'ordre faible, les ports dans le réseau en commutation, qui sont reliés au dispositif principal d'interconnexion d'ordre faible et aux dispositifs secondaires d'ordre faible, étant pointés par l'identificateur ID multidestinataire (S02), et
l'ouverture d'un canal de connexion entre le réseau en commutation et l'un des dispositifs secondaires d'interconnexion d'ordre faible lors de la défaillance du dispositif principal d'interconnexion d'ordre faible, les ports dans le réseau en commutation, qui sont reliés au dispositif principal d'interconnexion d'ordre faible et
aux dispositifs secondaires d'interconnexion d'ordre faible, étant pointés par l'identificateur ID multidestinataire (S03).

2. Procédé selon la revendication 1, dans lequel le flux binaire présente la forme de cellules.

3. Procédé selon la revendication 2, dans lequel le flux binaire est converti sous la forme de cellules en étant découpé.

4. Procédé selon la revendication 1, dans lequel le flux binaire présente la forme de paquets.

5. Procédé selon la revendication 1, dans lequel la fermeture de canaux de connexion entre le réseau en commutation et les dispositifs secondaires d'interconnexion d'ordre faible comprend :
la fermeture des canaux de connexion dans une ou plusieurs directions entre le réseau en commutation et les dispositifs secondaires d'interconnexion d'ordre faible.

6. Procédé selon la revendication 1, dans lequel l'ouverture d'un canal de connexion entre le réseau en commutation et l'un des dispositifs secondaires d'interconnexion d'ordre faible lors de la défaillance du dispositif principal d'interconnexion d'ordre faible comprend en outre :
la fermeture d'un canal de connexion entre le réseau en commutation et le dispositif principal d'interconnexion d'ordre faible.

7. Procédé selon la revendication 6, dans lequel la fermeture d'un canal de connexion entre le réseau en commutation et le dispositif principal d'interconnexion d'ordre faible est suivie par l'ouverture d'un canal de connexion entre le réseau en commutation et l'un des dispositifs secondaires d'interconnexion d'ordre faible.

8. Procédé selon la revendication 1, dans lequel la programmation de contenant virtuel d'ordre faible de hiérarchie SDH est mise en oeuvre de manière à ce que deux dispositifs d'interconnexion d'ordre faible soient reliés au réseau en commutation.

9. Procédé selon la revendication 8, dans lequel l'identificateur ID multidestinataire est un identificateur ID à deux destinataires, l'identificateur ID à deux destinataires pointant respectivement vers les ports dans le réseau en commutation qui sont reliés aux deux dispositifs d'interconnexion d'ordre faible.

10. Dispositif destiné à mettre en oeuvre une protection primaire - secondaire d'un dispositif d'interconnexion d'ordre faible destiné à mettre en oeuvre une programmation de contenant virtuel d'ordre faible de hiérarchie SDH sur la base d'un réseau en commutation (A), ledit dispositif comprenant deux dispositifs d'interconnexion d'ordre faible (B1 à BN) ou plus qui sont reliés à un réseau en commutation (A) dans lequel l'un des deux dispositifs d'interconnexion d'ordre faible ou plus qui se trouve à l'état actif est un dispositif principal d'interconnexion d'ordre faible et les autres se trouvant à l'état de sauvegarde sont chacun un dispositif secondaire d'interconnexion d'ordre faible, dans lequel ledit dispositif comprend en outre un contrôleur (C) qui commande respectivement l'ouverture et la fermeture de canaux de connexion entre les dispositifs d'interconnexion d'ordre faible (B1 à BN) et le réseau en commutation (A), et le contrôleur alloue un identificateur ID multidestinataire en tant qu'adresse de destination d'un flux binaire incluant un contenant virtuel d'ordre élevé, le contenant virtuel d'ordre élevé incluant un contenant virtuel d'ordre faible de hiérarchie SDH devant être programmé, l'identificateur ID multidestinataire pointant respectivement vers des ports qui sont reliés à des dispositifs d'interconnexion d'ordre faible (B1 à BN) dans le réseau en commutation (A), lorsque le dispositif principal d'interconnexion d'ordre faible fonctionne convenablement, le contrôleur est configuré pour fermer des canaux de connexion entre le réseau en commutation et les dispositifs secondaires d'interconnexion d'ordre faible, les ports dans le réseau en commutation, qui sont reliés au dispositif principal d'interconnexion d'ordre faible et aux dispositifs secondaires d'interconnexion d'ordre faible, sont pointés par l'identificateur ID multidestinataire ; et le contrôleur est configuré pour ouvrir un canal de connexion entre le réseau en commutation et l'un des dispositifs secondaires d'interconnexion d'ordre faible lors de la défaillance du dispositif principal d'interconnexion d'ordre faible, les ports dans le réseau en commutation, qui sont reliés au dispositif principal d'interconnexion d'ordre faible et aux dispositifs secondaires d'interconnexion d'ordre faible, étant pointés par l'identificateur ID multidestinataire.
